# EUROPÄISCHE PATENTSCHRIFT

(11) **EP 0 656 403 B1**
(45) Veröffentlichungstag und Bekanntmachung des Hinweises auf die Patenterteilung: **21.06.2000**
(21) Anmeldenummer: 94810663.8
(22) Anmeldetag: 23.11.1994
(51) Int. Cl.: C09B 67/20, C09B 67/08, C09B 67/00

(54) **Pigmentzusammensetzung aus Diketopyrrolopyrrol und Aminoalkylacrylatharz**
Pigment composition based on diketopyrrolopyrrol and an aminoalkyl acrylic resin
Composition pigmentaire à base de dicetopyrrolopyrrolo et de résine aminoalkyleacrylique

(30) Priorität: 01.12.1993 CH 357493
(43) Veröffentlichungstag der Anmeldung: 07.06.1995
(73) Patentinhaber: Ciba Specialty Chemicals Holding Inc., 4057 Basel (CH)
(72) Erfinder: Bugnon, Philippe, Dr., CH-1724 Essert (CH)

(56) Entgegenhaltungen:
- EP-A- 0 022 746
- EP-A- 0 201 347
- EP-A- 0 466 646
- US-A- 3 884 871

## Beschreibung

Die vorliegende Anmeldung betrifft eine Pigmentzusammensetzung enthaltend ein Diketopyrrolopyrrolpigment und einen Aminoalkylacrylatharz sowie deren Verwendung zum Einfärben von hochmolkularem organischem Material.

Aus verschiedenen Publikationen ist bekannt, dass bestimmte Eigenschaften von Pigmenten, darunter auch die Diketopyrrolopyrrole, durch Behandlung mit analogen, leicht modifizierten Produkten und/oder Harzen, verbessert werden können. Das US-Patent 4 791 204 beschreibt z.B. Pigmentzusammensetzungen aus einem Diketopyrrolopyrrolpigment und beispielsweise einem Metall- oder Ammoniumsalz eines sulfonierten Diketopyrrolopyrrols, die sich durch ausserordentlichem rheologischem Verhalten und hohem Glanz der damit erhaltenen Ausfärbungen auszeichnen. Ähnliche Resultate werden gemäss US-Patent 5 200 528 mit Pigmentzusammensetzungen aus einem Diketopyrrolopyrrolpigment und einem mindestens einen Aminoalkoxyrest enthaltenden Diketopyrrolopyrrol erhalten. Aus US-Patent 4 880 472 sind organische Pigmente, u.a. auch Diketopyrrolopyrrolpigmente, bekannt, deren Teilchenoberfläche mit einem festhaftenden, über eine hydroxylgruppenhaltige Zwischenschicht fixierten Überzug aus Metalloxiden versehen ist, welche sich ebenfalls durch ein sehr gutes rheologisches Verhalten auszeichnen. Solche Pigmentzusammensetzungen eignen sich auch zum verzugsfreien Färben von Polyolefinen. Die EP-A 466 646 beschreibt ein Verfahren zum verzugsfreien Färben von Polyolefinen, bei dem die Teilchenoberfläche des Pigments, z.B. eines Diketopyrrolopyrrols, direkt oder indirekt mit einer Schicht eines polaren Polymeren, z.B. eines Acrylpolymeren auf Basis von Acrylsäure, Methacrylsäure und/oder deren Alkylestern, überzogen wird. Bevorzugt wird dabei die Acrylpolymerschicht über eine Silanschicht aufgetragen, die ihrerseits auf einer die Teilchenoberfläche des Pigments umhüllenden Schicht aus hydrolysiertem Zirkonacetylacetonat adsorbiert ist. Aus US-Patent 4 734 137 ist ein Verfahren zur Herstellung von Azo-, Thioindigo und insbesondere Chinacridonpigmenten mit gutem rheologischem Verhalten und hohem Glanz bekannt, welches darin besteht eines der obenerwähnten Pigmente in einem aprotischen polaren Lösungsmittel in Gegenwart eines Alkalyhydroxids und Wasser zu lösen und danach durch Zugabe einer wässrigsäuren Lösung eines Aminoalkylacrylatharzes ein Pigmentpräparat auszufällen, das nach der Isolierung nach üblichen Methoden, die gewünschten Eigenschaften besitzt. Eine ähnliche Zusammensetzung, welche ein anionisches Tensid enthält, ist in JP-AO 58-215 461 beschrieben.

Gemäss der vorliegenden Erfindung ist nun gefunden worden, dass die Behandlung bestimmter Diketopyrrolopyrrolpigmente mit einem Aminoalkylacrylatharz zu ganz ungeahnt hohen Eigenschaften, insbesondere Glanz und rheologisches Verhalten, führt.

Die vorliegende Erfindung betrifft demnach eine Pigmentzusammensetzung enthaltend
A) ein 1,4-Diketopyrrolo[3,4-c]pyrrol-Pigment der Formel 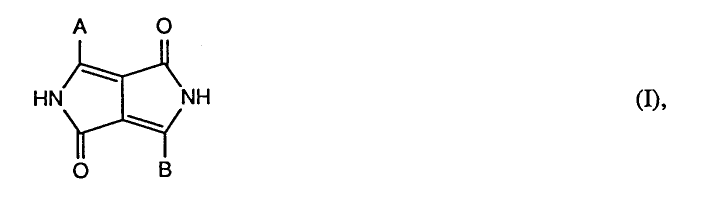 worin A und B unabhängig voneinander eine Gruppe der Formel 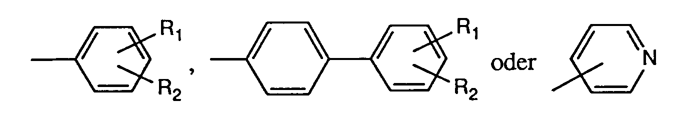 bedeuten, worin R₁ und R₂ unabhängig voneinander Wasserstoff, Halogen, oder CN ist,
   und
B) 0,1-20 Gew.%, bezogen auf das Diketopyrrolopyrrol der Formel I, eines Acrylharzes erhältlich durch Homopolymerisation eines Monomeren der Formel 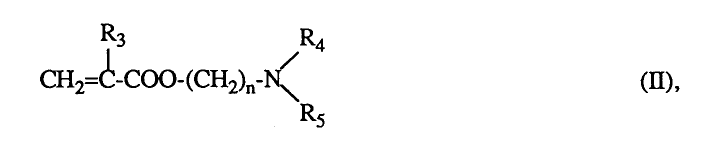 worin R₃ Wasserstoff oder Methyl und R₄ und R₅ unabhängig voneinander Wasserstoff, Methyl oder Ethyl bedeuten und n eine Zahl von 1 bis 6 ist, oder durch Copolymerisation des gleichen Monomeren mit einem mit letzterem copolimerisierbaren Monomeren.

R₁ und R₂ bedeuten als Halogen z.B. Jod, Fluor, insbesondere Brom und bevorzugt Chlor.

Im Diketopyrrolopyrrol-Pigment der Formel I sind A und B vorzugsweise gleich und bedeuten bevorzugt eine Gruppe der Formel 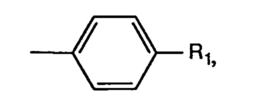 worin R₁ Wasserstoff, Chlor oder Phenyl ist.

Besonders bevorzugt werden die erfindungsgemässen Pigmentzusammensetzungen, welche einen Acrylharz gemäss B, der durch Homopolymerisation eines Monomeren der Formel II, worin R₃, R₄ und R₅ Methyl und n die Zahlen 1 oder 2 bedeuten, erhalten wird, in einer Menge von 3-10 Gew.%, bezogen auf das Diketopyrrolopyrrol der Formel I, enthalten.

Die erfindungsgemässen Pigmentzusammensetzungen lassen sich auf einfache Weise, z.B. dadurch herstellen, dass das Pigment in wässriger Suspension mit dem Acrylharz unter Rühren nachbehandelt wird. Dabei kann vom trockenen Pigmentpulver, einem Presskuchen oder einer aus der Synthese anfallenden Suspension ausgegangen werden. Der Acrylharz kann entweder vorgängig mit Wasser gelöst werden oder fest der Pigmentsuspension zugegeben werden.

Falls nötig kann die Suspension nach üblichen Methoden mit einem Dispergieraggregat (z.B. einem Hochdruckhomogenisator oder einem Hochgeschwindigkeitsrührer) dispergiert werden. Meistens ist dies nicht nötig, da die Acrylharze im allgemeinen sehr gute benetzende Eigenschaften besitzen. Der Pigmentgehalt in der Suspension kann in weiten Grenzen variiert werden und kann gegebenenfalls bis zu 40 Gew.% betragen. Zweckmässig setzt man Suspensionen mit 5 bis 20 Gew.% Pigment ein. Die Nachbehandlung des Pigments mit dem Acrylharz (B) kann bei Raumtemperatur, gegebenenfalls aber auch bei bis zu ca. 80°C erhöhter Temperatur, durchgeführt werden. Die Rührdauer variiert zwischen 1 und 20 Stunden. Zur Erleichterung der Filtration des behandelten Pigments können auch Filtrationshilfsmittel, wie z.B. 0,5 bis 15 Gew.% einer aliphatischen 1,2-Dihydroxyverbindung mit 8 bis 22 C-Atomen, insbesondere 1 bis 5 Gew.% 1,2-Dodecandiol, eingesetzt werden, sofern diese keine negative Wirkung bei der Verwendung der erfindungsgemässen Pigmentzusammensetzungen zeigen. Analoge Zusätze (z.B. übliche Dispergiermittel) können auch in üblichen Mengen zur Verbesserung der Dispergierbarkeit des Produktes zugesetzt werden.

Der Acrylharz gemäss (B)ist bekannt und kann nach üblichen Methoden, wie z.B. in US-Patent 4 734 137 beschrieben, hergestellt werden.

Die erfindungsgemässen Pigmentzusammensetzungen können als Pigmente zum Färben von hochmolekularem organischem Material verwendet werden.

Hochmolekulare organische Materialien, die mit den erfindungsgemässen Pigmentzusammensetzungen gefärbt bzw. pigmentiert werden können, sind z.B. Celluloseether und -ester, wie Ethylcellulose, Nitrocellulose, Celluloseacetat, Cellulosebutyrat, natürliche Harze oder Kunstharze, wie Polymerisationsharze oder Kondensationsharze, wie Aminoplaste, insbesondere Harnstoff- und Melamin-Formaldehydharze, Alkyldharze, Phenoplaste, Polycarbonate, Polyolefine, Polystyrol, Polyvinylchlorid, Polytetrafluoroethylen, Polyamide, Polyurethane, Polyester, Polyether-ketone, Polyphenylenoxide, Gummi, Casein, Silikon und Silikonharze, einzeln oder in Mischungen.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Pigmentzusammensetzungen als Toner oder in Form von Präparaten einzusetzen. Bezogen auf das zu pigmentierende hochmolekulare organische Material kann man die erfindungsgemässen Pigmentzusammensetzungen in einer Menge von 0,01 bis 30 Gew.%, vorzugsweise von 0,1 bis 10 Gew.%, einsetzen.

Zum Pigmentieren von Lacken und Druckfarben werden die hochmolekularen organischen Materialien und die erfindungsgemässen Pigmentzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie hohe Farbstärke, gute Dispergierbarkeit, gute Überlackier-, Migrations-, Hitze-, Licht- und Wetterbeständigkeit sowie auch geringe Viskosität aus.

Ferner weisen die erfindungsgemässen Pigmentzusammensetzungen im Vergleich zu den Basispigmenten und auch zu den gemäss Stand der Technik behandelten Pigmenten verbesserte anwendungstechnische Eigenschaften in der Applikation auf, wie eine verbesserte Rheologie und Lagerbeständigkeit, geringere Trenneffekte wie Ausschwimmen bei der Mitverwendung von z.B. Weisspigmenten, eine geringere Flockulationstendenz und unerwartet hohen Glanz der damit erhaltenen Ausfärbungen. Infolge der guten rheologischen Eigenschaften dieser Kompositionen ist es auch möglich, Anstrichstoffe und Lacke hoher Konzentration (sogenannte high loadings) herzustellen. Sie eignen sich demnach vorzugsweise zum Färben von Lacken, insbesondere für Metalleffektlackierungen.

Die folgenden Beispiele erläutern die Erfindung.

Beispiel 1a: Einer Lösung von 10 g Dimethylaminoethylmethacrylat in 30 g Wasser werden 0,1 g K₂S₂O₈ (1 Gew.% Initiator, bezogen auf das Monomere) zugefügt. Die Lösung wird mehrmals entgast, mit Stickstoff gespült und unter Stickstoff-Atmosphäre während 5 Stunden bei 30°C gerührt. Danach wird die Lösung mit 40 ml Wasser verdünnt. Es bildet sich zuerst eine hochviskose Masse, die sich aber wieder verflüssigt.

b) 27,2 g eines 36,8 %igen wässrigen Presskuchens von 1,4-Diketo-3,6-diphenylpyrrolo[3,4-c]pyrrol werden in 65 g Wasser mit 7,7 g der Polymerlösung (a) durch kräftiges Rühren bei Zimmertemperatur während 5 Stunden dispergiert. Dies entspricht einer Polymerkonzentration von 10 Gew.%, bezogen auf das Pigment. Die Suspension wird anschliessend filtriert und der Rückstand wird mit Wasser gewaschen, bei 80°C getrocknet und pulverisiert.

Beispiel 2: Beispiel 1 wird wiederholt mit der einzigen Ausnahme, dass 4 % Initiator (K₂S₂O₈) anstelle von 1 % eingesetzt wird.

Beispiel 3: 1051 g eines 28,54 %igen wässrigen Presskuchens von 1,4-Diketo-3,6-di-(4-chlorphenyl)-pyrrolo[3,4-c]pyrrrol werden mit 67,6 g einer Polymerlösung gemäss Beispiel 2 (d.h. mit 4 % Initiator erhalten) in 1881 g Wasser dispergiert (dies entspricht einer Polymerkonzentration von 5 Gew.%, bezogen auf das Pigment). Die Suspension wird über Nacht weitergerührt, dann filtriert. Der Rückstand wird anschliessend mit Wasser gewaschen, im Vakuumtrockenschrank getrocknet und pulverisiert.

Beispiel 4: Beispiel 1 wird wiederholt mit der einzigen Ausnahme, dass anstelle des 1,4-Diketo-3,6-diphenylpyrrolo[3,4-c]pyrrols die gleiche Gewichtsmenge 1,4-Diketo-3,6-di(4-diphenyl)-pyrrolo[3,4-c]pyrrol verwendet wird.

Beispiel 5: Beispiel 1 wird wiederholt mit der einzigen Ausnahme, dass die Polymerlösung in einer Menge entsprechend 10 Gew.% Polymere, bezogen auf das Pigment, eingesetzt wird.

Beispiel 6: 2 g des gemäss Beispiel 1b) erhaltenen Produktes und 48 g Einbrennlack bestehend aus
- 56 g: Alkydharz ALKYDAL® F310 (Bayer AG; 60 %ig in Xylol)
- 13 g: Melaminharz CYMEL® 327 (Cyanamid; 90 %ig in Butanol)
- 25 g: Xylol
- 25 g: Butanol
- 2,5 g: 1-Methoxy-2-Propanol und
- 1 g: Silikonöl (1 %ig in Xylol)
werden nach üblichen Methoden vermischt. Die Applikation des erhaltenen Farblackes erfolgt durch Ablauf auf Glasplatte. Vor dem Einbrennen im Umluftrockenschrank (30 Minuten bei 120°C) lässt man ca. 30 Minuten bei 25° Neigung abluften.

Die Glanzwerte werden mit einem Glanzmesser (Zehntner ZGM 1020®) in 20° Neigung gemäss DIN 67 530 gemessen.

Die so erhaltene Lackierung ergibt im Vergleich zu einer Lackierung mit einem unbeschichteten Pigment einen ungeahnt besseren Glanz.

Beim jeweiligen Ersatz des Produktes von Beispiel 1b) mit den Produkten der Beispiele 2-5 erhält man etwa gleichwertige Resultate.

Beispiel 7: Zur Bestimmung des Fliessverhaltens werden die Produkte der Beispiele 1-5 sowie die entsprechnenden unbehandelten Pigmente nach üblichen Methoden in ein Alkyd-Lacksystem (SETAL® 84, Kunstharzfabrick Synthesis BV, Holland; Festkörpergehalt 70 %) eingearbeitet.

Das Fliessverhalten der Lackanreibungen, welche 12 % Pigment und 42 % Gesamtfestkörper enthalten und deren Pigment/Bindemittel-Verhältnis 0,3 beträgt, wird mit einem HAAKE-Viskosimeter ROTOVISCO® RV12 ermittelt (Messtemperatur: 25°C; Messsystem: SV-SP; Scherbereich: D = 0-100 [1/s]).

Die mit den Produkten der Beispiele 1-5 erhaltenen Lackanreibungen zeigen gegenüber der mit unbhandelten Pigmenten erhaltenen Lackanreibungen ein deutlich besseres Fliessverhalten (Viskositätswerte).

## Patentansprüche

1. Pigmentzusammensetzung enthaltend
A) ein 1,4-Diketopyrrolo[3,4-c]pyrrol-Pigment der Formel 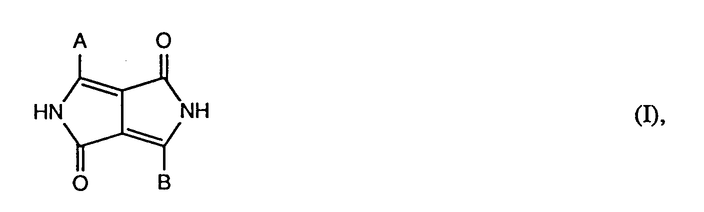 worin A und B unabhängig voneinander eine Gruppe der Formel 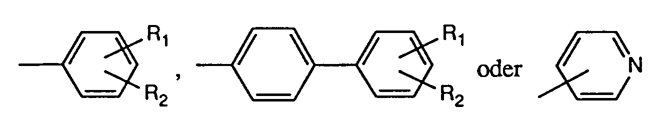 bedeuten, worin R₁ und R₂ unabhängig voneinander Wasserstoff, Halogen, oder CN ist,
und
B) 0,1-20 Gew.%, bezogen auf das Diketopyrrolopyrrol der Formel I, eines Acrylharzes erhältlich durch Homopolymerisation eines Monomeren der Formel 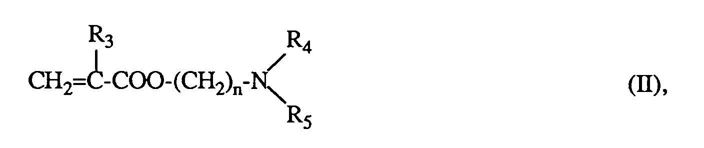 worin R₃ Wasserstoff oder Methyl und R₄ und R₅ unabhängig voneinander Wasserstoff, Methyl oder Ethyl bedeuten und n eine Zahl von 1 bis 6 ist, oder durch Copolymerisation des gleichen Monomeren mit einem mit letzterem copolimerisierbaren Monomeren.

2. Pigmentzusammensetzung gemäss Anspruch 1, dadurch gekennzeichnet, dass im 1,4-Diketopyrrolo[3,4-c]pyrrol-Pigment der Formel I A und B gleich sind.

3. Pigmentzusammensetzung gemäss Anspruch 2, dadurch gekennzeichnet, dass A und B eine Gruppe der Formel 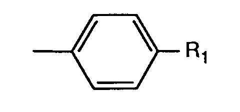 bedeuten, worin R₁ Wasserstoff, Chlor oder Phenyl ist.

4. Pigmentzusammensetzung gemäss Anspruch 1, dadurch gekennzeichnet, dass sie einen Acrylharz gemäss (B), der durch Homopolymerisation eines Monomeren der Formel II, worin R₃, R₄ und R₅ Methyl und n die Zahlen 1 oder 2 bedeuten, erhalten wird, in einer Menge von 4-10 Gew.%, bezogen auf das Diketopyrrolopyrrol der Formel I, enthalten.

5. Hochmolekulares organisches Material enthaltend als Farbmittel eine Pigmentzusammensetzung gemäss Anspruch 1.

6. Hochmolekulares organische Material gemäss Anspruch 5, dadurch gekennzeichnet, dass es ein Lack oder eine Druckfarbe ist.

## Claims

1. A pigment composition comprising
A) 1,4-diketopyrrolo[3,4-c]pyrrole pigment of formula 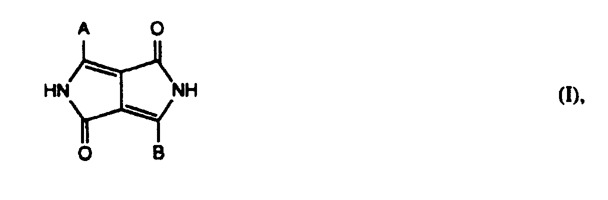 wherein A and B are each independently of the other a group of formula 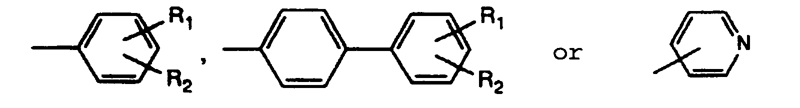 in which R₁ and R₂ are each independently of the other hydrogen, halogen or CN,
and
B) 0.1-20% by weight, based on the diketopyrrolopyrrole of formula I, of an acrylic resin obtainable by homopolymerisation of a monomer of formula 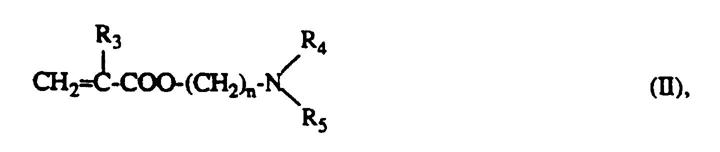 in which R₃ is hydrogen or methyl and R₄ and R₅ are each independently of the other hydrogen, methyl or ethyl and n is an integer from 1 to 6, or by copolymerisation of the same monomer with a monomer which is copolymerisable with said same monomer.

2. A pigment composition according to claim 1, wherein A and B are identical in the 1,4-diketopyrrolo[3,4-c]pyrrole pigment of formula I.

3. A pigment composition according to claim 2, wherein A and B are a group of formula 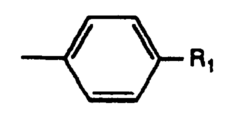 in which R₁ is hydrogen, chloro or phenyl.

4. A pigment composition according to claim 1, which contains an acrylic resin (B), which is obtained by homopolymerisation of a monomer of formula II in which R₃, R₄ and R₅ are methyl and n is 1 or 2 in an amount of 4-10% by weight, based on the diketopyrrolopyrrole of formula I.

5. Organic material of high molecular mass comprising as colourant a pigment composition according to claim 1.

6. Organic material of high molecular mass according to claim 5, which is a paint or a printing ink.

## Revendications

1. Composition pigmentaire contenant
A) un pigment de 1,4-dicéto-pyrrolo[3,4-c]pyrrole de formule 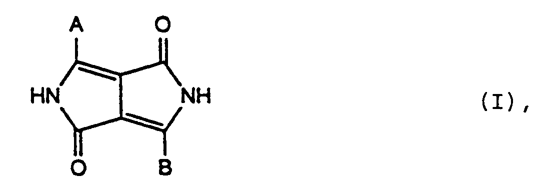 où A et B représentent, indépendamment l'un de l'autre, un groupe de formule 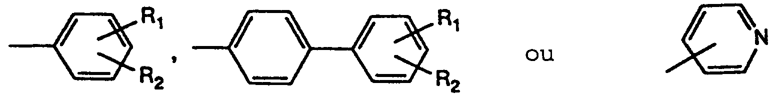 où R₁ et R₂ représentent, indépendamment l'un de l'autre, des atomes d'hydrogène, des atomes d'halogène ou un groupe CN,
et
B) de 0,1 à 20% massiques, par rapport au dicétopyrrolopyrrole de formule I, d'une résine acrylique que l'on peut obtenir par homopolymérisation d'un monomère de formule 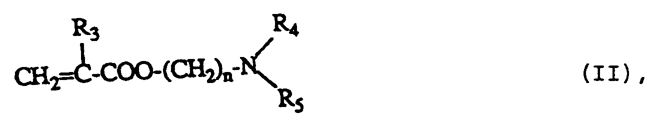 où R₃ représente un atome d'hydrogène ou un groupe méthyle et R₄ et R₅ représentent, indépendamment l'un de l'autre, des atomes d'hydrogène, des groupes méthyle ou éthyle et n est un nombre de 1 à 6, ou par copolymérisation du même monomère avec un monomère copolymérisable avec ce dernier.

2. Composition pigmentaire selon la revendication 1, caractérisée en ce que A et B sont identiques dans le pigment de 1,4-dicétopyrrolo[3,4-c]pyrrole de formule I.

3. Composition pigmentaire selon la revendication 2, caractérisée en ce que A et B représentent un groupe de formule 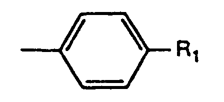 où R₁ représente un atome d'hydrogène, un atome de chlore ou un groupe phényle.

4. Composition pigmentaire selon la revendication 1, caractérisée en ce qu'elle contient une résine acrylique selon (B) que l'on obtient par homopolymérisation d'un monomère de formule II, où R₃, R₄ et R₅ représentent un groupe méthyle et n vaut 1 ou 2, en une quantité de 4 à 10% massiques, par rapport au dicétopyrrolopyrrole de formule I.

5. Matière organique de haut poids moléculaire contenant en tant que colorant une composition pigmentaire selon la revendication 1.

6. Matière organique de haut poids moléculaire selon la revendication 5, caractérisée en ce qu'il s'agit d'un vernis ou d'une encre d'imprimerie.
